# EUROPEAN PATENT APPLICATION

(11) **EP 2 658 232 A1**
(43) Date of publication of application: **30.10.2013**
(21) Application number: 13164963.4
(22) Date of filing: 23.04.2013
(51) Int. Cl.: H04M 3/56, H04N 7/15, H04L 29/06

(54) **Method and system for an optimized multimedia communications system**

(30) Priority: 23.04.2012 US 201261636884 P
(71) Applicant: Onmobile Global Limited, 560 076 Karnataka (IN)
(72) Inventor: Jabri, Marwan, Tiburon, CA 94920 (US); Kenrick, Brody, Erskineville, NSW 2043 (AU); Wong, Albert, Petaluma, CA 94954 (US); Wang, Jianwei, Penngrove, CA 94951 (US); Georgy, Sameh, Reading RG2 0DJ (GB)
(74) Representative: Delorme, Nicolas

(57) **Abstract**

A method for optimizing a multiparty multimedia conferencing communication session over communications networks is provided. A host multimedia stream is received from a host multimedia client (204). A first element indicative of presence of a multimedia conferencing session is transmitted to participating multimedia clients by the host multimedia client (206). Subsequently, individual multimedia streams are received from participating multimedia clients (208). The host multimedia stream is processed and transmitted to the participating clients (210). A second element indicative of presence of the multimedia conferencing session is transmitted by the participating clients to the host multimedia client and to each other (216). The individual multimedia streams are processed separately and transmitted to the host multimedia client and to the participating multimedia clients (220). The processed individual multimedia streams and host multimedia stream are received and displayed (222) based on at least one of a predefined layout pattern and a layout pattern dynamically modified during the multiparty conferencing session.

## Description

### Field of the Invention

The present invention relates generally to the field of multimedia communications systems for providing multimedia communications via user communications devices. In particular, the present invention relates to a method and system for processing multimedia session media for optimized user experience and managing effective display of multiple multimedia stream outputs received from participants during multiparty conferencing.

### Background of the Invention

Consumer multimedia communication i.e. video calling, video conferencing, video casting etc. via various communications devices is rapidly gaining widespread demand. For example, consumer video communication involves users located at different locations all over the world to participate in a video conference, at any desired time using various communications devices. Examples of communications devices include, but are not limited to, smartphones, tablets, and any other fixed or wireless communications devices.

As multimedia communications systems and communications devices evolve, apart from other applications, high quality video conferencing experience is gaining paramount importance. Users expect their communications devices to make their media seamlessly accessible to other users with varied capabilities. Therefore, it is becoming increasingly necessary that multimedia sessions and multimedia display during videoconferencing or video casting sessions are as per user desires and demands. In addition, bandwidth availability for implementing media streaming sessions at fixed locations such as home/office over, for example, a Wi-Fi connection and at mobile devices connected to a wide area network (WAN) of a wireless operator poses limitations towards high quality media streaming. Furthermore, during multiparty conferencing, the conventional approach of mixing multiple video streams and then rendering streaming media as a single mixed composited media on communications devices poses restrictions on user experience and display management. In particular, the conventional approach of multiparty conferencing requires, for example, a multipoint control unit (MCU) for mixing multiple video streams to a mixed composited media and re-encoding the mixed composited media to different video formats for different participants. In addition, participants may need a bridge number for dialing in a multiparty conferencing call.

In light of the above, there is a need for a method and system for providing multimedia session media to communications devices in a manner that optimizes user experience during multimedia conferencing sessions. Further, there is a need for a method and system for providing multiple multimedia stream outputs corresponding to each of the multiple participants to communications devices involved in a multiparty conferencing session. Furthermore, there is a need for a method and system for facilitating effective display of streaming multimedia received from various participants during multiparty conference sessions. Also, there is a need for managing multimedia participant sessions and multimedia media sessions taking into consideration network bandwidth limitations.

### Summary of the Invention

A computer-implemented method for optimizing a multiparty multimedia conferencing communication session over one or more communications networks is provided. In an embodiment of the present invention, the method comprises the steps of receiving, via a processor, a host multimedia stream from a host multimedia client. The method further comprises transmitting, by the host multimedia client via a processor, a first element to participating multimedia clients. The first element is indicative of presence of a multimedia conferencing session. Further, the method comprises receiving, via the processor, individual multimedia streams from participating multimedia clients. The individual multimedia streams are received after the first element is received by the participating clients. Furthermore, the method comprises processing, via the processor, the host multimedia stream and transmitting the processed host multimedia stream to the participating clients. The method further comprises transmitting, by each of the participating clients via a processor, a second element to the host multimedia client and to each other. The second element is indicative of presence of the multimedia conferencing session. Further, the method comprises processing, via the processor, the individual multimedia streams of each of the participating multimedia clients separately and transmitting the processed individual multimedia streams to the host multimedia client and to the participating multimedia clients. Finally, the method comprises receiving and displaying, via the processor, the processed individual multimedia streams and the processed host multimedia stream based on at least one of a predefined layout pattern and a layout pattern dynamically modified during the multiparty conferencing session.

A system for optimizing a multiparty multimedia conferencing communication session over one or more communications networks is provided. In an embodiment of the present invention, the system comprises a multimedia gateway and multiple multimedia clients. The multiple multimedia clients comprise a host multimedia client and participating multimedia clients. Each of the multiple multimedia clients in communication with one or more processors is configured to transmit an element to each other. The element is indicative of presence of a multimedia conferencing session. Further, the multiple multimedia clients are configured to communicate with the multimedia gateway for transmitting individual multimedia streams respectively to the multimedia gateway after transmitting the element. Furthermore, the multimedia gateway in communication with a processor is configured to process the individual multimedia streams received from the multiple multimedia clients separately and transmit each of the individual multimedia streams to the multiple multimedia clients. The multiple multimedia clients are configured to identify the processed individual multimedia streams and are further configured to display the processed individual multimedia streams.

A multimedia client for optimizing a multiparty multimedia conferencing communication session over one or more communications networks is provided. In an embodiment of the present invention, the multimedia client comprises a client multimedia unit in communication with a processor and configured to create a multimedia conferencing session, transmit an element indicative of presence of the multimedia conferencing session to participating clients and receive individual multimedia streams of the participating clients after transmitting the element. The multimedia client further comprises a video layout processing unit in communication with the processor and configured to display the received individual multimedia streams based on at least a predefined layout pattern and a layout pattern dynamically modified during the multiparty conferencing session.

A computer program product comprising a non-transitory computer-readable medium having computer-readable program code stored thereon is provided. In an embodiment of the present invention, the computer-readable program code comprises instructions that, when executed by one or more processors, cause the one or more processors to receive a host multimedia stream from a host multimedia client. The computer-readable program code further causes the one or more processors to transmit, by the host multimedia client, a first element to participating multimedia clients. The first element is indicative of presence of a multimedia conferencing session. Further, the computer-readable program code causes the one or more processors to receive individual multimedia streams from participating multimedia clients. The individual multimedia streams are received after the first element is received by the participating clients. Furthermore, the computer-readable program code causes the one or more processors to process the host multimedia stream and transmit the processed host multimedia stream to the participating clients. The computer-readable program code further causes the one or more processors to transmit, by each of the participating clients, a second element to the host multimedia client and to each other. The second element is indicative of presence of the multimedia conferencing session. Further, the computer-readable program code causes the one or more processors to process the individual multimedia streams of each of the participating multimedia clients separately and transmit the processed individual multimedia streams to the host multimedia client and to the participating multimedia clients. Furthermore, the computer-readable program code causes the one or more processors to receive and display the processed individual multimedia streams and the processed host multimedia stream based on at least one of a predefined layout pattern and a layout pattern dynamically modified during the multiparty conferencing session.

### Brief Description of the Drawings

The present invention is described by way of embodiments illustrated in the accompanying drawings wherein:

FIG. 1 is a block diagram of a system for optimizing multimedia communication during a multimedia conferencing session, in accordance with various embodiments of the present invention;

FIGs. 2A and 2B illustrate a flowchart of a method for optimizing multimedia communication during a multimedia conferencing session, in accordance with an embodiment of the present invention;

FIG. 3 is a block diagram of a system for optimizing multimedia communication during a multimedia casting session in accordance with an embodiment of the present invention;

FIG. 4 illustrates a flowchart of a method for optimizing multimedia communication during a multimedia casting session, in accordance with an embodiment of the present invention; and

FIG. 5 illustrates an exemplary computer system in which various embodiments of the present invention may be implemented.

### Detailed Description of the Drawings

A system and method for optimizing multimedia communications during a multimedia conferencing session is provided. The invention provides for carrying out multimedia communications such as a multiparty conference between multimedia clients by providing remote individual multimedia streams to the multimedia clients instead of an integrated composite media stream to optimize user experience. Further, the invention provides for managing display of the individual multimedia streams received by the multimedia clients.

The disclosure is provided in order to enable a person having ordinary skill in the art to practice the invention. Exemplary embodiments herein are provided only for illustrative purposes and various modifications will be readily apparent to persons skilled in the art. The general principles defined herein may be applied to other embodiments and applications without departing from the spirit and scope of the invention. The terminology and phraseology used herein is for the purpose of describing exemplary embodiments and should not be considered limiting. Thus, the present invention is to be accorded the widest scope encompassing numerous alternatives, modifications and equivalents consistent with the principles and features disclosed herein. For purposes of clarity, details relating to technical material that is known in the technical fields related to the invention have been briefly described or omitted so as not to unnecessarily obscure the present invention.

The present invention would now be discussed in context of embodiments as illustrated in the accompanying drawings.

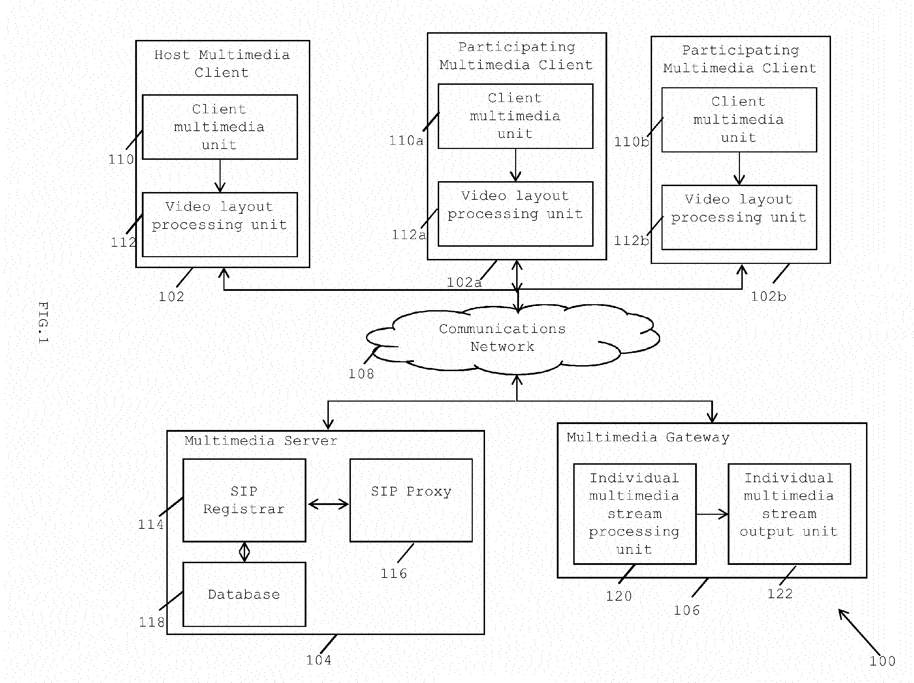

FIG. 1 is a block diagram of a system 100 for optimizing multimedia communication during a multimedia conferencing session, in accordance with various embodiments of the present invention. Multimedia conferencing includes, but is not limited to, peer-to-peer video conferencing, multiparty video conferencing, peer-to-peer video casting, peer-to-group video casting etc. In various embodiments of the present invention, the system 100 is implemented in a client-server architecture. The system 100 comprises one or more multimedia clients 102, a multimedia server 104 and a multimedia gateway 106. The one or more multimedia clients 102 are also referred as host multimedia client 102 and participating multimedia clients 102a and 102b throughout the specification.

The one or more multimedia clients 102 are communications devices which are configured to carry out digital multimedia communications i.e. audio, video, text and data communication. Examples of the multimedia clients 102 include, but are not limited to, personal computer (PC), smartphones, tablet phones such as iPads, and other wireless communications devices. In an exemplary embodiment of the present invention, the one or more multimedia clients 102 implement channel-based telecommunications protocols such as the Internet Engineering Task Force (IETF) Session Initiation Protocol (SIP) and other standards and recommendations for carrying out digital multimedia communications over a communications network 108. The communications network 108 includes, but is not limited to, Wireless Fidelity (Wi-Fi) networks, Third Generation (3G) networks, 3.5G networks, Fourth Generation or Long Term Evolution networks (4G/LTE), and high speed networks supporting multimedia communications services. The one or more multimedia clients 102 communicate with the multimedia server 104 and the multimedia gateway 106 over the communications network 108. In an embodiment of the present invention, each multimedia client 102 may operate using a different communications network 108. In another embodiment of the present invention, each multimedia client 102 may operate using the same communications network 108.

In an embodiment of the present invention, each of the one or more multimedia clients 102, 102a and 102b comprises a client multimedia unit 110, 110a and 110b and a video layout processing unit 112, 112a and 112b respectively. The client multimedia units 110, 110a and 110b are configured to initiate and participate in a multimedia communication session such as a multiparty conference session and transmit respective individual multimedia streams to each other. The client multimedia units 110, 110a and 110b are further configured to process individual multimedia streams received from each other for displaying each of the individual multimedia streams. In an exemplary embodiment of the present invention, the client multimedia units 110, 110a and 110b may comprise a video codec (not shown) such as Advanced Video Coding H.264 AVC codec or an ITU-T Rec. H.264's Scalable Video Codec (SVC) codec to perform coding and decoding of the multimedia streams. The client multimedia units 110, 110a and 110b may also comprise an audio codec (not shown), such as Adaptive Multi-Rate codec (AMR), AMR Wideband codec (AMR-WB), or Advanced Audio Coding codec (AAC). In addition, the client multimedia units 110, 110a and 110b may comprise a session signaling module (not shown) handling an open-standard session protocol, such as IETF SIP, or a proprietary solution. The session signaling module interoperates with other clients, the multimedia server 104 and the multimedia gateway 106 for determining participant's sessions, managing participant's sessions and managing session media. The video layout processing units 112,112a and 112b are configured to display each of the individual multimedia stream based on a predefined layout pattern and bandwidth limitations of the concerned communications network 108. The client multimedia units 110, 110a and 110b and the video layout processing units 112,112a and 112b execute various functionalities via one or more processors (not shown) using program instructions stored in a memory (not shown). The operations of the client multimedia units 110, 110a and 110b and the video layout processing units 112,112a and 112b will be explained in detail in later sections of the specification.

The multimedia server 104 is configured to mediate end-to-end multimedia communications between the multimedia clients 102. In an embodiment of the present invention, the multimedia server 104 comprises a SIP registrar 114, a SIP proxy 116 and a database 118. The SIP registrar 114 is configured to facilitate registration of the one or more multimedia clients 102 for carrying out digital multimedia communications. The SIP proxy 116 is configured to route multimedia session related signals (i.e. SIP signals) of the one or more multimedia clients 102 for carrying out, for example, a multimedia conferencing session. In an exemplary embodiment of the present invention, the multimedia server 104 may be deployed in a cloud computing architecture. In another exemplary embodiment of the present invention, the multimedia server 104 may be deployed in data centers of telecommunication service providers of multimedia services. In yet another exemplary embodiment of the present invention, the multimedia server 104 may be dispersed across both the cloud and the data centers. In another embodiment of the present invention, two multimedia servers 104 may be deployed. The two multimedia servers 104 are mirrored in real time and are referred as a primary server and a secondary server. The secondary server is used for SIP registration and SIP signaling during multimedia communications in the event the primary server fails due to, for example, overloading. The database 118 is configured to store multimedia client 102 related details which are retrieved by the SIP proxy 116 for carrying out multimedia communications between the multimedia clients 102. The SIP registrar 114, the SIP proxy 116 and the database 118 execute various functionalities via one or more processors (not shown) using program instructions stored in a memory (not shown).

The multimedia gateway 106 is a media server which is configured to process multimedia streams and is further configured to distribute the multimedia streams to the multimedia clients 102 during a multimedia communication, in accordance with an embodiment of the present invention. The multimedia gateway 106 comprises an individual multimedia stream processing unit 120 and an individual multimedia stream output unit 122.

In an exemplary embodiment of the present invention, the individual multimedia stream processing unit 120 processes individual multimedia streams received from each of the multimedia clients 102. The individual multimedia stream processing unit 120 processes the individual multimedia streams by dynamically adapting the bitrates of the individual media streams based on the multimedia client 102, 102a and 102b device types and communications network 108 conditions. In an exemplary embodiment of the present invention, the individual multimedia stream processing unit 120 is configured to adapt the individual multimedia streams by performing transcoding sessions for each multimedia stream. For example, for a 4-party multiparty video conference, 12 transcoding sessions are required. For multimedia clients 102 with similar media property, the individual multimedia stream processing unit 120 is configured to perform 4 transcoding sessions converting the incoming video to a quarter frame-size and/or a quasi-quarter video bitrate of the incoming video. These 4 transcoding sessions are reused by the individual multimedia stream processing unit 120 in the 4-party conferencing session. The multimedia gateway 106 is configured to reuse transcoding sessions based on video quality restrictions, network conditions of participants, service-level requirements of the users of the multimedia clients 102, interactions between the multimedia clients 102, the multimedia gateway 106, multimedia server 104 etc. In another exemplary embodiment of the present invention, individual multimedia processing unit 120 may adapt the multimedia streams by performing selective transmission of a subset of Scalable Video Codec (SVC) layers, received from the one or more multimedia clients 102, according to the available bandwidth of the one or more multimedia clients 102. The individual multimedia stream output unit 122 is configured to transmit each of the processed individual multimedia streams to the multimedia clients 102, 102a and 102b respectively during a multiparty conference session. The individual multimedia stream processing unit 120 and the individual multimedia stream output unit 122 execute various functionalities via one or more processors (not shown) using program instructions stored in a memory (not shown). The operations of the individual multimedia stream processing unit 120 and individual multimedia stream output unit 122 will be discussed in detail in later sections of the specification.

In operation, in an exemplary embodiment of the present invention, a host multimedia client 102 initiates a video conferencing session via the client multimedia unit 110 with participating multimedia clients 102a, and 102b. The host multimedia client 102 sends a registration request (e.g SIP REGISTER request) to the multimedia server 104. The SIP registrar 114 in the multimedia server 104 accepts the registration request and stores the information from the registration request in the database 118. The information may include a SIP Uniform Resource Identifier (URI) of the host multimedia client 102 which represents the host multimedia client device of the user and corresponding Internet Protocol (IP) address. The SIP registrar 114 binds the SIP URI of the host multimedia client 102 and its IP address (referred as contact URI) and stores in the database 118. Similarly, all the participating multimedia clients 102a and 102b are registered and respective contact URIs are stored in the database 118.

During the video conferencing session, the SIP proxy 116 retrieves and uses the contact URIs stored in the database 118 to route session signals associated with video streams of the one or more registered multimedia clients 102. Further, individual video streams are received and processed by the multimedia gateway 106 which is then transmitted to the multimedia clients 102, 102a, 102b and displayed, in accordance with various embodiments of the present invention. In particular, in an exemplary embodiment of the present invention, during a multiparty video conferencing session, the client multimedia unit 110 in the host multimedia client 102 sends a multimedia session creation message to the multimedia gateway 106 via the multimedia server 104 to start a video conferencing session. After the session is created, the client multimedia unit 110 in the host multimedia client 102 sends a host video stream to the multimedia gateway 106. The host video stream includes a unique stream identifier. The individual multimedia stream processing unit 120 in the multimedia gateway 106 receives the host video stream and retrieves the unique stream identifier.

The client multimedia unit 110 in the host multimedia client 102 then sends a pseudo-invite message to the participating multimedia clients 102a and 102b. The pseudo-invite message indicates presence of the multiparty video conferencing session. In one example, the pseudo-invite message may be an electronic file such as an Extensive Markup Language (XML) file which includes the unique stream identifier of the host multimedia client 102 and list of the participating multimedia clients 102a and 102b. The list of participating multimedia clients 102a and 102b may include the device identifications of the participating multimedia clients 102a and 102b.

After receiving the pseudo-invite message from the host multimedia client 102, the client multimedia units 110a and 110b in the participating multimedia clients 102a and 102b analyze the pseudo-invite message and retrieve the unique stream identifier of the host multimedia client 102. The client multimedia units 110a and 110b then send respective multimedia session creation messages to the multimedia gateway 106 via the multimedia server 104 to participate in the multiparty video conferencing session. After the session is created, the client multimedia units 110a and 110b send individual video streams to the multimedia gateway 106. The individual multimedia stream processing unit 120 in the multimedia gateway 106 receives the individual multimedia streams.

Further, the client multimedia units 110a and 110b create a session joining message respectively and send to the multimedia gateway 106. After receiving the session joining messages, the individual multimedia processing unit 120 in the multimedia gateway 106 processes the host multimedia client's 102 host video stream to adapt the same as per media property requirements of the participating multimedia clients 102a and 102b device types, and communications network 108 conditions to optimize video output quality. The media property may include, but is not limited to, video bitrate, frame size, frame rate, video codec mode etc. As will be understood by a person skilled in the art, based on the communications network conditions, the video bitrate requirement may vary. For example, the video bit rate requirement may be higher if the communications network is a Wi-Fi network for participating multimedia client 102a as compared to a 3G network for participating multimedia client 102b. Further, the video frame size requirement is higher if the participating multimedia client 102a is an iPad which has high resolution screen size as compared to participating multimedia client 102b which may be an iPhone. After the processing, the individual multimedia output stream unit 122 in the multimedia gateway 106 transmits the host multimedia client's 102 host video stream to the participating multimedia clients 102a and 102b.

Similarly, the client multimedia units 110a and 110b transmit respective pseudo-invite messages including corresponding unique stream identifiers to the host multimedia client 102 and to each other. The client multimedia units 110, 110a and 110b in each of the host multimedia client 102 and the participating multimedia clients 102a and 102b analyze the pseudo-invite messages and retrieve the unique stream identifiers. The host multimedia client 102 then creates a session joining message and sends to the multimedia gateway 106. The individual multimedia processing unit 120 in the multimedia gateway 106 then processes the individual video streams of the participating multimedia clients 102a and 102b and adapts the video streams as per media property requirement of the host multimedia client 102 and the participating multimedia clients 102a and 102b device types, and communications network conditions to optimize output video quality. The individual multimedia output stream unit 122 in the multimedia gateway 106 then transmits the individual video streams to the multimedia clients 102, 102a, and 102b. Thus, each multimedia client 102 transmits their remote video streams to the multimedia gateway 106 and receives individual remote video streams of all the other multimedia clients 102. The client multimedia units 110, 110a and 110b in the multimedia clients 102, 102a, and 102b receive the individual multimedia streams from each other and decode the multimedia streams for playback.

The video layout processing units 112, 112a and 112b in the host multimedia client 102 and participating multimedia clients 102a and 102b process the decoded video streams and display the video streams based on a predefined layout pattern. In an exemplary embodiment of the present invention, based on the predefined layout pattern, the video layout processing units 112, 112a and 112b may display the individual video streams on a different user interface screen or as a different layout in the multimedia clients 102, 102a and 102b. In another exemplary embodiment of the present invention, the predefined layout pattern may include type of user interface screens and layouts based on the number of participants. In yet another exemplary embodiment of the present invention, the predefined layout pattern may include displaying a local video from the device camera (not shown) in an unused space of the screen and displaying remote video streams received from other multimedia clients in the layout screen.

In an exemplary embodiment of the present invention, the video layout processing units 112, 112a and 112b facilitate the users to dynamically change the layout pattern during the video conferencing session. In another exemplary embodiment of the present invention, the video layout processing units 112, 112a and 112b facilitate to display a high resolution video stream from a particular multimedia client in the entire screen of the receiving multimedia client as compared to the remaining video streams. The video layout processing units 112, 112a and 112b perform the abovementioned in communication with the individual multimedia processing unit 120 in the multimedia gateway 106 in order to meet bandwidth limitations.

In various embodiments of the present invention, the system 100 may comprise other components (not shown) such as an application configuration and management unit for management of configuration parameters of the one or more multimedia clients 102, a security component such as Network Address Translator (NAT) traversal unit (i.e. Traversal using Relay NAT (TURN)/ Simple Traversal utilities for NAT (STUN) server), a subscription manager for managing billing and accounting of the multimedia communications services. The components may further include an application server to execute centralized and coordinated multiple multimedia sessions, an instant messenger server for facilitating instant messaging capability in the one or more multimedia clients, and a network address book for centralized storage of user contacts. Further, the components may include a presence server for notifying presence events of users of the one or more multimedia clients 102.

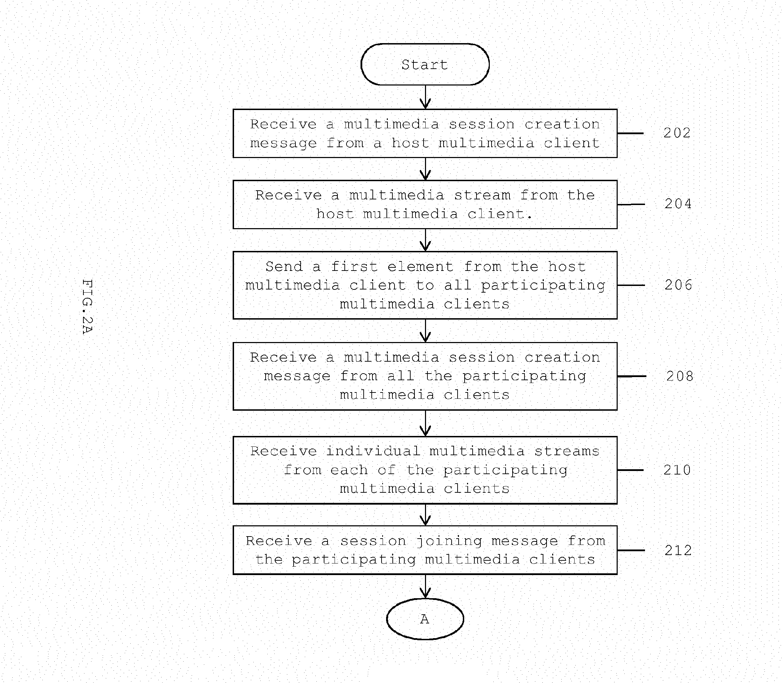

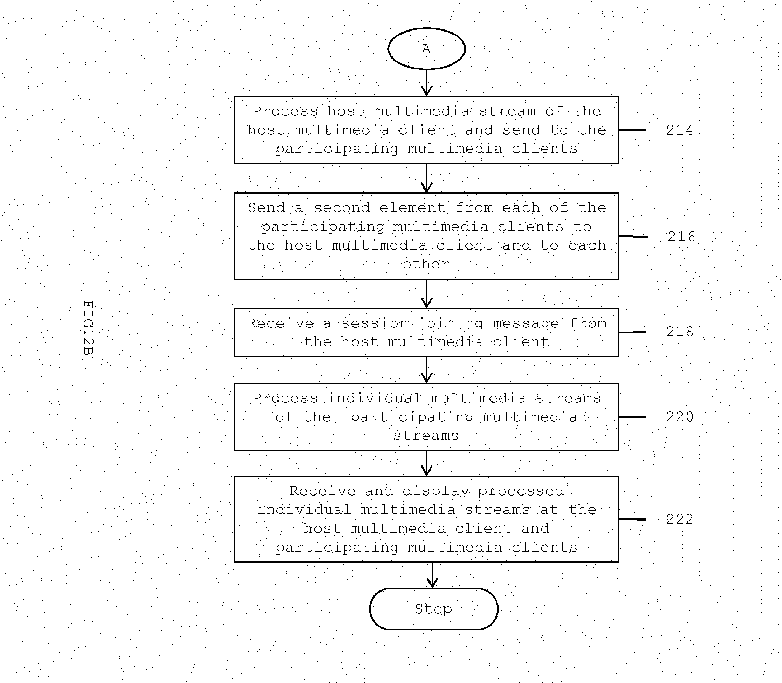

FIGs. 2A and 2B illustrate a flowchart of a method for optimizing multimedia communication during a multimedia conferencing session, in accordance with an embodiment of the present invention.

At step 202, a multimedia session creation message is received from a host multimedia client. In an embodiment of the present invention, the host multimedia client is registered with the multimedia communication service. The host multimedia client starts a multiparty conference session by sending a multimedia session creation message to a multimedia gateway. In an exemplary embodiment of the present invention, the multimedia session creation message may be oncall_[full_msisdn]_[10-digit_random_number]_conf_create, where Mobile Subscriber Integrated Services Digital Network number (MSISDN) is the phone number of the host multimedia client. The multimedia gateway receives and processes the multimedia session creation message and creates a multimedia session for the host multimedia client. The multimedia gateway then sends a session creation response message to the host multimedia client.

At step 204, a host multimedia stream is received from the host multimedia client. In an exemplary embodiment of the present invention, the host multimedia stream may include a video stream.

At step 206, a first element is sent from the host multimedia client to all participating multimedia clients. In an embodiment of the present invention, the participating multimedia clients are registered with the multimedia communication service. In an exemplary embodiment of the present invention, the first element may include a message such as a pseudo-invite message which is intended to indicate presence of the multimedia conference session. The pseudo-invite message may be an electronic file such as an XML file which includes a unique stream identifier of the host multimedia client and list of all participants. The list of participants may include multimedia client device identifications (ids). In another exemplary embodiment of the present invention, the first element may include a signaling message which is intended to indicate presence of the multimedia conference session.

At step 208, a multimedia session creation message is received from all the participating multimedia clients. In an embodiment of the present invention, the participating multimedia clients participate in the multiparty conference session by sending a multimedia session creation message to the multimedia gateway. In an exemplary embodiment of the present invention, the multimedia session creation message may be oncall_[full_msisdn]_[10-digit_random_number]_conf_create, where MSISDN is the phone number of the participating multimedia clients. The multimedia gateway receives and processes the multimedia session creation message and creates a multimedia session for the participating multimedia clients. The multimedia gateway then sends a multimedia session creation response message to the participating multimedia clients.

At step 210, individual multimedia streams are received from each of the participating multimedia clients. In an exemplary embodiment of the present invention, the individual multimedia streams may include remote video streams of the participating multimedia clients.

At step 212, a session joining message is received from the participating multimedia clients. In an embodiment of the present invention, the multimedia session creation message may be oncall_[host_full_msisdn]_[10-digit_random_number]_conf_join.

At step 214, host multimedia stream of the host multimedia client is processed and sent to the participating multimedia clients. In an exemplary embodiment of the present, the host multimedia stream includes the host video stream which is processed by adapting the same as per media property requirements of the participating multimedia client device types, and communications network conditions to optimize video output quality. The media property may include, but is not limited to, video bitrate, frame size, frame rate, video codec mode etc. As will be understood by a person skilled in the art, based on the communications network conditions, the video bitrate requirement may vary. For example, the video bit rate requirement may be higher if the communications network is a Wi-Fi network for one participating multimedia client as compared to a 3G network for another participating multimedia client. Further, the video frame size requirement is higher if one participating multimedia client is an iPad which has high resolution screen size as compared to the other participating multimedia client which may be an iPhone.

At step 216, a second element is sent from each of the participating multimedia clients to the host multimedia client and to each other. In an embodiment of the present invention, the second element may include a message such as a pseudo-invite message which is intended to indicate presence of a multimedia conferencing session. The pseudo-invite message may be an electronic file such as an XML file which includes unique stream identifiers of the participating multimedia clients and list of all participants. The list of participants may include multimedia client's device identifications (ids).

At step 218, a session joining message is received from the host multimedia client. In an embodiment of the present invention, the session joining message may be oncall_[participatingclient_full_msisdn]_[10_digit_random_number]_co nf_join.

At step 220, individual multimedia streams of the participating multimedia clients are processed. In an embodiment of the present invention, the individual multimedia streams include the remote video streams which are processed as discussed above with respect to the host multimedia stream.

At step 222, the processed individual multimedia streams are received and displayed at the host multimedia client and the participating multimedia clients. In an embodiment of the present invention, the processed individual multimedia streams are displayed as per a video layout pattern defined in the host multimedia client and the participating multimedia client. In another embodiment of the present invention, the video layout of the individual multimedia streams may be altered dynamically.

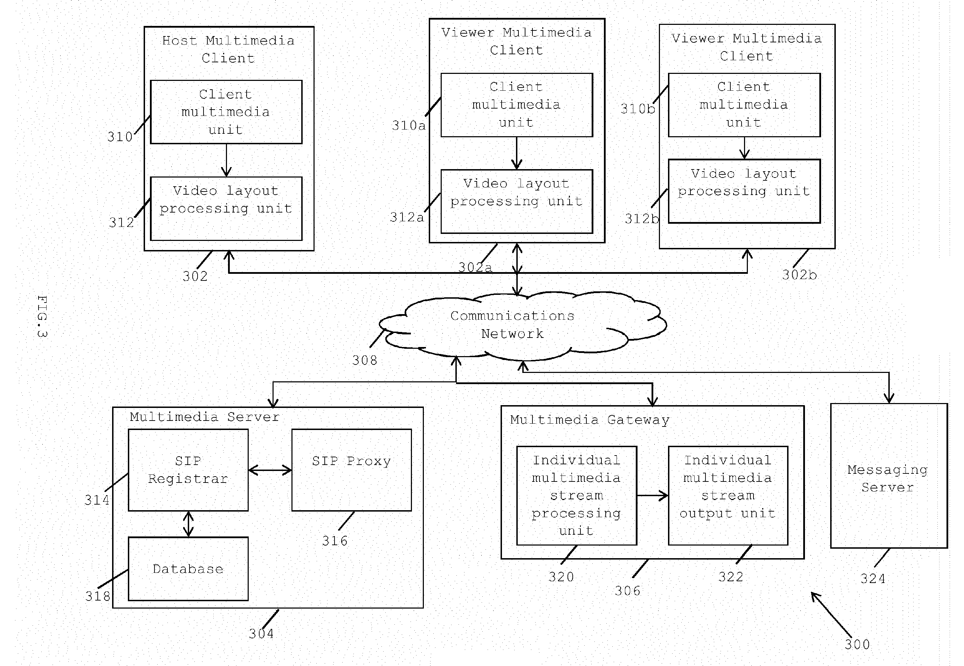

FIG. 3 is a block diagram of a system 300 for optimizing multimedia communication during a multimedia casting session, in accordance with various embodiments of the present invention. Multimedia casting includes, but is not limited to, peer-to-peer video casting, and peer-to-group video casting. Multimedia casting facilitates users to stream audio and video to other peers in one to many mode. In various embodiments of the present invention, the system 300 is implemented in a client-server architecture. The system 300 comprises one or more multimedia clients 302, a multimedia server 304, a multimedia gateway 306 and a messaging server 324. The one or more multimedia clients 302 are also referred as host multimedia client 302 and viewer multimedia clients 302a and 302b throughout the specification. Each of the one or more multimedia clients 302 comprises a client multimedia unit 310, 310a and 310b and a video layout processing unit 312, 312a and 312b. Further, the multimedia server 304 comprises a SIP Registrar 314, a SIP Proxy 316 and a database 318. Furthermore, the multimedia gateway 306 comprises an individual multimedia stream processing unit 320 and individual multimedia stream output unit 322. The one or more multimedia clients 302, the multimedia server 304, the multimedia gateway 306 and the messaging server 324 communicate over a communications network 308 (as discussed with respect to FIG. 1)

In an embodiment of the present invention, the host multimedia client 302 registers with a multimedia casting session service such as a video casting session via the multimedia server 304 i.e. the SIP registrar 314, SIP proxy 316 and database 318 as discussed with respect to FIG. 1.

In operation, in an exemplary embodiment of the present invention, during the video casting session, the multimedia gateway 306 receives a multimedia session creation message from the client multimedia unit 310 in the host multimedia client 302. After creating a video casting session, the multimedia gateway 306 sends a session creation response message to the host multimedia client 302. The client multimedia unit 310 then sends a video stream to the multimedia gateway 306. In an example, the video stream is sent to the multimedia gateway 306 using Real-Time Transport Protocol (RTP). The individual multimedia stream processing unit 320 is configured to process the video stream to create one or more processed video streams (as discussed in conjunction with FIG.1). The individual multimedia stream output unit 322 is configured to generate a multimedia link associated with the one or more processed video streams. In one example, the multimedia link may include a Uniform Resource Locator (URL). Furthermore, the individual multimedia stream output unit 322 is configured to identify the viewer multimedia clients 302a and 302b selected by the host multimedia client 302 and to transmit the multimedia link to the viewer multimedia clients 302a and 302b.

In an exemplary embodiment of the present invention, the individual multimedia stream output unit 322 sends a text message with the multimedia link associated with the one or more processed video streams via the messaging server 324 to each of the identified viewer multimedia clients 302a and 302b. The text message may include a Short Message Service (SMS), an Instant Message (IM) or an electronic mail including the multimedia link associated with the one or more processed video stream. The viewer multimedia clients 302a and 302b receive the multimedia link and the users of the viewer multimedia clients 302a and 302b receive the one or more processed video streams by clicking the multimedia link. In an example, the viewer multimedia clients 302a and 302b renders a live casting of the one or more processed video streams via a built-in media player (not shown) in a web browser (not shown). In an example, the one or more processed video streams are sent to the viewer multimedia clients 302a and 302b using streaming protocols such as HTTP progressive download (PD), HTTP live streaming (HLS), Hyper Text Markup Language 5 (HTML5) or Real-Time Messaging Protocol (RTMP) by the individual multimedia stream output unit 322. The video layout processing units 312, 312a and 312b processes the video stream and displays the video stream as per a predefined layout pattern.

In various embodiments of the present invention, multiple host multimedia clients 302 may simultaneously send respective video streams to the multimedia gateway 306. The individual multimedia stream processing unit 320 in the multimedia gateway 306 is configured to process the received video streams individually as discussed in conjunction with FIG. 1. Further, the individual multimedia stream output unit 322 is configured to transmit the individual video streams to the viewer multimedia clients 302a and 302b which displays the received video streams effectively.

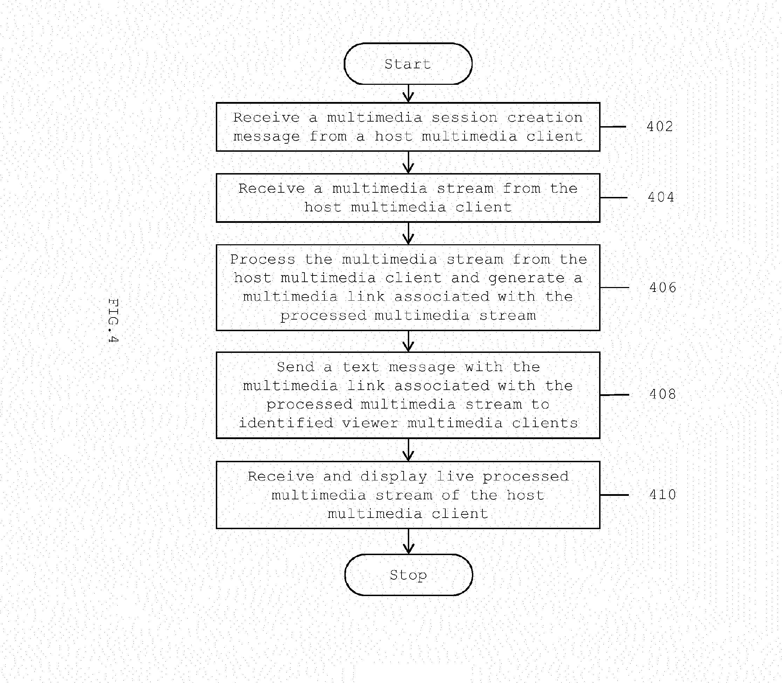

FIG. 4 illustrates a flowchart of a method for optimizing multimedia communication during a multimedia casting session, in accordance with an embodiment of the present invention.

At step 402, a multimedia session creation message is received from a host multimedia client (as discussed in conjunction with FIG.2). At step 404, a multimedia stream is received from the host multimedia client (as discussed in conjunction with FIG. 2).

At step 406, the multimedia stream is processed and a multimedia link associated with the processed multimedia stream is generated. In an embodiment of the present invention, the multimedia stream is processed as discussed in conjunction with FIG. 2. In an exemplary embodiment of the present invention, the multimedia link may include a URL.

At step 408, a text message including the multimedia link is sent to identified viewer multimedia clients. In an embodiment of the present invention, the text message may include an SMS, IM or an email. The identified viewer multimedia clients are the clients that are selected by the user of the host multimedia client.

At step 410, a live processed multimedia stream is received and displayed by the viewer multimedia clients. In an embodiment of the present invention, the multimedia stream is rendered on the viewer multimedia clients when the users of the viewer multimedia clients select the multimedia link received at step 408.

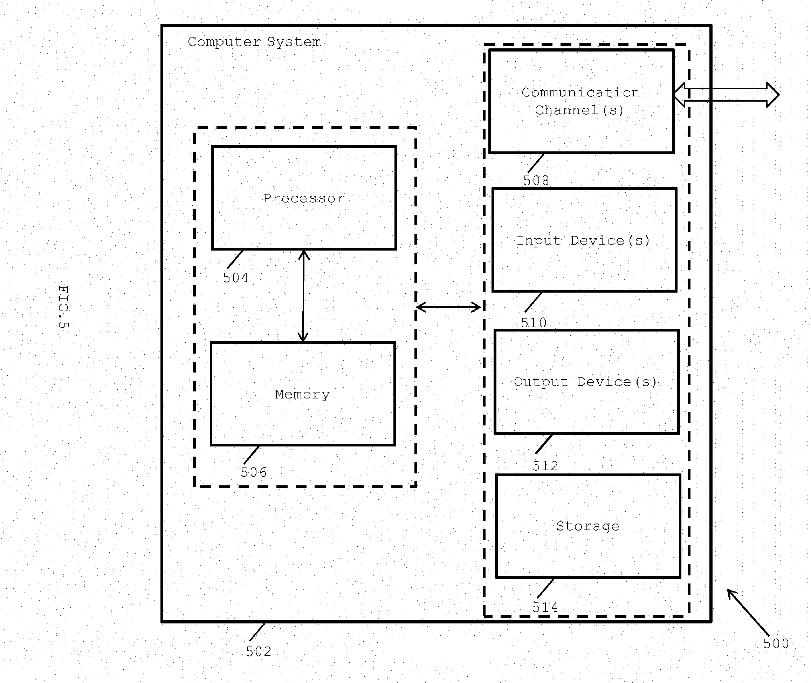

FIG. 5 illustrates an exemplary computer system in which various embodiments of the present invention may be implemented.

The computer system 502 comprises a processor 504 and a memory 506. The processor 504 executes program instructions and may be a real processor. The processor 504 may also be a virtual processor. The computer system 502 is not intended to suggest any limitation as to scope of use or functionality of described embodiments. For example, the computer system 502 may include, but not limited to, a general-purpose computer, a programmed microprocessor, a micro-controller, a peripheral integrated circuit element, and other devices or arrangements of devices that are capable of implementing the steps that constitute the method of the present invention. In an embodiment of the present invention, the memory 506 may store software for implementing various embodiments of the present invention. The computer system 502 may have additional components. For example, the computer system 502 includes one or more communication channels 508, one or more input devices 510, one or more output devices 512, and storage 514. An interconnection mechanism (not shown) such as a bus, controller, or network, interconnects the components of the computer system 502. In various embodiments of the present invention, operating system software (not shown) provides an operating environment for various softwares executing in the computer system 502, and manages different functionalities of the components of the computer system 502.

The communication channel(s) 508 allow communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, bluetooth or other transmission media.

The input device(s) 510 may include, but not limited to, a keyboard, mouse, pen, joystick, trackball, a voice device, a scanning device, or any another device that is capable of providing input to the computer system 502. In an embodiment of the present invention, the input device(s) 510 may be a sound card or similar device that accepts audio input in analog or digital form. The output device(s) 512 may include, but not limited to, a user interface on CRT or LCD, printer, speaker, CD/DVD writer, or any other device that provides output from the computer system 502.

The storage 514 may include, but not limited to, magnetic disks, magnetic tapes, CD-ROMs, CD-RWs, DVDs, flash drives or any other medium which can be used to store information and can be accessed by the computer system 502. In various embodiments of the present invention, the storage 514 contains program instructions for implementing the described embodiments.

In an embodiment of the present invention, the computer system 502 is part of a distributed network where various embodiments of the present invention are implemented for rapidly developing end-to-end software applications.

The present invention may be implemented in numerous ways including as a system, a method, or a computer program product such as a computer readable storage medium or a computer network wherein programming instructions are communicated from a remote location.

The present invention may suitably be embodied as a computer program product for use with the computer system 502. The method described herein is typically implemented as a computer program product, comprising a set of program instructions which is executed by the computer system 502 or any other similar device. The set of program instructions may be a series of computer readable codes stored on a tangible medium, such as a computer readable storage medium (storage 514), for example, diskette, CD-ROM, ROM, flash drives or hard disk, or transmittable to the computer system 502, via a modem or other interface device, over either a tangible medium, including but not limited to optical or analogue communications channel(s) 508. The implementation of the invention as a computer program product may be in an intangible form using wireless techniques, including but not limited to microwave, infrared, bluetooth or other transmission techniques. These instructions can be preloaded into a system or recorded on a storage medium such as a CD-ROM, or made available for downloading over a network such as the internet or a mobile telephone network. The series of computer readable instructions may embody all or part of the functionality previously described herein.

While the exemplary embodiments of the present invention are described and illustrated herein, it will be appreciated that they are merely illustrative. It will be understood by those skilled in the art that various modifications in form and detail may be made therein without departing from or offending the spirit and scope of the invention as defined by the appended claims.

## Claims

1. A computer-implemented method for optimizing a multiparty multimedia conferencing communication session over one or more communications networks, the method comprising the steps of:
receiving, via a processor, a host multimedia stream from a host multimedia client;
transmitting, by the host multimedia client via a processor, a first element to participating multimedia clients, wherein the first element is indicative of presence of a multimedia conferencing session;
receiving, via the processor, individual multimedia streams from participating multimedia clients, wherein the individual multimedia streams are received after the first element is received by the participating clients;
processing, via the processor, the host multimedia stream and transmitting the processed host multimedia stream to the participating clients,
transmitting, by each of the participating clients via a processor, a second element to the host multimedia client and to each other, wherein the second element is indicative of presence of the multimedia conferencing session;
processing, via the processor, the individual multimedia streams of each of the participating multimedia clients separately and transmitting the processed individual multimedia streams to the host multimedia client and to the participating multimedia clients; and
receiving and displaying, via the processor, the processed individual multimedia streams and the processed host multimedia stream based on at least one of a predefined layout pattern and a layout pattern dynamically modified during the multiparty conferencing session.

2. The computer-implemented method of claim 1, wherein the host multimedia stream is received after a multimedia session for the host multimedia client is created.

3. The computer-implemented method of claims 1 to 2, wherein the first element comprises a pseudo-invite message, the pseudo-invite message comprising a unique stream identifier of the host multimedia stream.

4. The computer-implemented method of claims 1 to 3, wherein the host multimedia stream is processed after receiving a session joining message from the participating multimedia clients respectively.

5. The computer-implemented method of claims 1 to 4, wherein the second element comprises a pseudo-invite message, the pseudo-invite message comprising corresponding unique stream identifiers of the participating multimedia clients.

6. The computer-implemented method of claims 1 to 5, wherein the individual multimedia streams are processed separately after receiving a session joining message from the host multimedia client.

7. The computer-implemented method of claims 1 to 6, wherein the step of processing the host multimedia stream comprises adapting the host multimedia stream based on media property requirements and the one or more communications network conditions of the participating clients respectively.

8. The computer-implemented method of claims 1 to 7, wherein the step of processing the individual multimedia streams of each of the participating multimedia clients comprises adapting the individual multimedia streams based on media property requirement and the communications network condition of the host multimedia client.

9. The computer-implemented method of claims 1 to 8, wherein the step of receiving and displaying the processed individual multimedia streams and the processed host multimedia stream comprises adjusting the individual multimedia stream layouts and the host multimedia stream layout in the host multimedia client and the participating multimedia clients respectively based on a predefined layout pattern.

10. The computer-implemented method of claims 1 to 9, wherein the step of receiving and displaying the processed individual multimedia streams and the processed host multimedia stream comprises dynamically adjusting the individual multimedia stream layouts and the host multimedia stream layout in the host multimedia client and the participating multimedia clients in response to a user interaction.

11. A system for optimizing a multiparty multimedia conferencing communication session over one or more communications networks, the system comprising:
a multimedia gateway; and
multiple multimedia clients, the multiple multimedia clients comprising a host multimedia client and participating multimedia clients, wherein each of the multiple multimedia clients in communication with one or more processors is configured to transmit an element to each other, the element indicating presence of a multimedia conferencing session and further wherein the multiple multimedia clients are configured to communicate with the multimedia gateway for transmitting individual multimedia streams respectively to the multimedia gateway after transmitting the element,
the multimedia gateway in communication with a processor is configured to process the individual multimedia streams received from the multiple multimedia clients separately and transmit each of the individual multimedia streams to the multiple multimedia clients,
wherein the multiple multimedia clients are configured to identify the processed individual multimedia streams and are further configured to display the processed individual multimedia streams.

12. The system of claim 11 wherein the element comprises unique stream identifiers associated with individual multimedia streams of the multiple multimedia clients and further wherein the multiple multimedia clients are configured to communicate with the multimedia gateway for joining a multimedia session.

13. The system of claim 12 wherein the multiple multimedia clients are configured to identify the processed individual multimedia streams based on the associated unique stream identifiers and is further configured to display the processed individual multimedia streams based on at least one of a predefined layout pattern and a layout pattern dynamically modified during the multiparty conferencing session.

14. The system of claims 11 to 13, wherein the multimedia gateway comprises an individual multimedia stream processing unit configured to receive a host multimedia stream from the host multimedia client.

15. The system of claim 14, wherein the host multimedia client comprises a client multimedia unit configured to transmit a first pseudo-invite message to the participating multimedia clients, wherein the first pseudo-invite message comprises a unique stream identifier of the host multimedia stream.

16. The system of claim 15, wherein the individual multimedia stream processing unit is configured to receive the individual multimedia streams from the participating multimedia clients, the individual multimedia streams being received after the first pseudo-invite message is received by the participating clients.

17. The system of claim 16, wherein the individual multimedia stream processing unit is configured to process the host multimedia stream, the host multimedia stream being processed after receiving a session joining message from the participating multimedia clients.

18. The system of claim 17, wherein the multimedia gateway comprises an individual multimedia stream output unit configured to transmit the processed host multimedia stream to the participating multimedia clients.

19. The system of claim 18, wherein each of the participating multimedia clients comprise a client multimedia unit configured to transmit a second pseudo-invite message to the host multimedia client and to each other, wherein the second pseudo-invite message comprises corresponding unique stream identifiers of the participating multimedia clients.

20. The system of claim 19, wherein the individual multimedia stream processing unit is configured to process the individual multimedia streams of each of the participating multimedia clients separately, the individual multimedia streams being processed after receiving a session joining message from the host multimedia client.

21. The system of claim 20, wherein the individual multimedia stream output unit is configured to transmit the individual multimedia streams to the host multimedia client and to the participating multimedia clients.

22. The system of claim 21, wherein the client multimedia units in the host multimedia client and the participating multimedia clients are configured to receive and display the processed individual multimedia streams and the processed host multimedia stream based on at least one of a predefined layout pattern and a layout pattern dynamically modified during the multiparty conferencing session.

23. The system of claims 11 to 22, wherein the individual multimedia processing unit processes the individual multimedia streams by adapting the individual multimedia streams based on media property requirements and the one or more communications network conditions of the multiple multimedia clients respectively.

24. A multimedia client for optimizing a multiparty multimedia conferencing communication session over one or more communications networks, the multimedia client comprising:
a client multimedia unit in communication with a processor and configured to:
create a multimedia conferencing session;
transmit an element indicative of presence of the multimedia conferencing session to participating clients; and
receive individual multimedia streams of the participating clients after transmitting the element; and
a video layout processing unit in communication with the processor and configured to display the received individual multimedia streams based on at least a predefined layout pattern and a layout pattern dynamically modified during the multiparty conferencing session.

25. The multimedia client of claim 24, wherein the element comprises a pseudo-invite message comprising unique stream identifiers associated with the individual multimedia streams.

26. A computer program product comprising:
a non-transitory computer-readable medium having computer-readable program code stored thereon, the computer-readable program code comprising instructions that, when executed by a processor, cause one or more processors to:
receive a host multimedia stream from a host multimedia client;
transmit, by the host multimedia client, a first element to participating multimedia clients, wherein the first element is indicative of presence of a multimedia conferencing session;
receive individual multimedia streams from participating multimedia clients, wherein the individual multimedia streams are received after the first element is received by the participating clients;
process the host multimedia stream and transmit the processed host multimedia stream to the participating clients,
transmit, by each of the participating clients, a second element to the host multimedia client and to each other,
wherein the second element is indicative of presence of the multimedia conferencing session;
process the individual multimedia streams of each of the participating multimedia clients separately and transmit the processed individual multimedia streams to the host multimedia client and to the participating multimedia clients; and
receive and display the processed individual multimedia streams and the processed host multimedia stream based on at least one of a predefined layout pattern and a layout pattern dynamically modified during the multiparty conferencing session.
